# EUROPÄISCHE PATENTANMELDUNG

(11) **EP 2 477 000 A1**
(43) Veröffentlichungstag der Anmeldung: **18.07.2012**
(21) Anmeldenummer: 11150978.2
(22) Anmeldetag: 14.01.2011
(51) Int. Cl.: G01C 15/00

(54) **Vermessungsgerät mit einer automatischen Darstellungswechsel-Funktionalität**

(71) Anmelder: Leica Geosystems AG, 9435 Heerbrugg (CH)
(72) Erfinder: Schorr, Christian, CH-9000, St. Gallen (CH); Schroeder, Frank, CH-9435, Heerbrugg (CH); Koch, Romy, CH-9443, Widnau (CH); Giger, Kurt, CH-9464, Rüthi (CH)
(74) Vertreter: Kaminski Harmann

(57) **Zusammenfassung**

Das Vermessungsgerät (10) weist eine Darstellungswechsel-Funktionalität auf, in deren Rahmen in Abhängigkeit von einer - aus den in der Aufsichtdarstellung (A) bzw. der räumlichen Darstellung angezeigten Linien - benutzerseitig ausgewählten Linie automatisch gesteuert durch die Auswerte- und Steuereinheit
• eine virtuelle Fläche durch die ausgewählte Linie und eine als vertikal vorgegebene Richtung definiert wird,
• eine Untermenge von Raumpunkten (1,2,5,6) aus der Raumpunkt-Menge selektiert wird, die innerhalb einer die virtuelle Fläche definiert umgebenden Pufferzone liegen, und
• eine Aufrissdarstellung (B) von ausschliesslich solchen Raumpunkten (1,2,5,6) die zur Untermenge gehören, auf dem Display angezeigt wird.

## Beschreibung

Die Erfindung betrifft ein Vermessungsgerät zum Vermessen und/oder Markieren von Raumpunkten im Rahmen von Bau und/oder Ausbau - insbesondere Innenausbau - von Gebäuden nach dem Oberbegriff des Anspruchs 1 sowie ein zugehöriges Verfahren nach dem Oberbegriff des Anspruchs 6 und ein zugehöriges Computerprogrammprodukt nach dem Oberbegriff des Anspruchs 10.

Ein weiterer erfindungsgemässer Aspekt bezieht sich auf ein System aus einem Konstruktionsvermessungsgerät und mindestens drei in Räumen anbringbaren Referenzpunkt-Marken nach dem Oberbegriff des Anspruchs 11 sowie auf ein sich für ein ebensolches System eignendes Konstruktionsvermessungsgerät nach dem Oberbegriff des Anspruchs 15.

Aus dem Stand der Technik sind Konstruktionsvermessungsgeräte mit einer Anzieleinrichtung bekannt, mithilfe derer manuell ein Raumpunkt, z.B. ein Eckpunkt eines Raumes, angezielt wird und die Anzielrichtung dann manuell zu einem nächsten zu vermessenden Raumpunkt, z.B. einem weiteren Eckpunkt, verändert wird.

Die DE 196 48 626 beispielsweise offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp- und Dreheinrichtung zur Ausrichtung und Richtungsmessung, ein Zielfernrohr sowie eine elektronische Auswerteeinheit zur Winkeldaten- und Entfernungsdatenerfassung und Datenübergabe an einen Computer. Für die Vermessung eines Raumes wird das Gerät an einer zentralen Stelle des Raumes positioniert, von der aus alle zu erfassenden Raum- und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr. Eine automatisierte sequentielle Vermessung mehrerer Raumpunkte, zu vergleichen beispielsweise mit einem Scan, oder auslösbare Funktionalitäten für benutzerdefinierte Wechsel zwischen drei- und zweidimensionalen Darstellungen vermessener Raumbereiche, werden in der DE 196 48 626 nicht offenbart.

Eine ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es werden jedoch auch in diesem Dokument keine automatisierte sequentielle Vermessung mehrerer Raumpunkte, zu vergleichen beispielsweise mit einem Scan, oder auslösbare Funktionalitäten für benutzerdefinierte Wechsel zwischen drei- und zweidimensionalen Darstellungen vermessener Raumbereiche, offenbart.

In der EP 1 733 185 werden eine Vorrichtung und ein Verfahren offenbart, womit speziell Kanten auf einer polygonalen, ansonsten ebenen Oberfläche genau vermessen werden sollen. Es werden jedoch keine automatisierte sequentielle Vermessung mehrerer Raumpunkte oder auslösbare Funktionalitäten für benutzerdefinierte Wechsel zwischen drei- und zweidimensionalen Darstellungen vermessener Raumbereiche, offenbart.

Aufgabe der Erfindung ist die Bereitstellung eines Vermessungsgeräts und eines zugehörigen Verfahrens zum Vermessen und Markieren von Raumpunkten in einer Konstruktion, insbesondere einem Innenraum eines Gebäudes, womit ein einfacher und schneller Wechsel von einer Ausgangsdarstellung von gespeicherten oder bereits vermessenen Punkten eines Raums hin zu einer auf dem Display angezeigten und einfach lesbar- und interpretierbaren Aufrissdarstellung des Raums ermöglicht wird.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Gegenstand der Erfindung ist ein Vermessungsgerät zum Vermessen und insbesondere Markieren von Raumpunkten einer Konstruktion - insbesondere Innenräumen von Gebäuden. Das Vermessungsgerät weist eine Basis, eine gegenüber der Basis dreh- und schwenkbaren, Distanzmessfunktionalität bereitstellende Anzieleinheit mit einer zur Emission eines Laserstrahls in Richtung einer Zielachse ausgebildeten Laserquelle und einem Laserlichtdetektor, eine Auswerte-und Steuereinheit und ein Display auf. Dabei ist eine räumliche Ausrichtung der Anzieleinheit gegenüber der Basis über zwei Winkelmesser erfassbar. Zudem ist die mit der Laserquelle, dem Laserlichtdetektor sowie den Winkelmessern verbunden, um eine erfasste Distanz einer entsprechenden Ausrichtung zuzuordnen und somit Koordinaten für Raumpunkte zu bestimmen. Des Weiteren sind eingegebene oder vermessenen Raumpunkte, die eine Raumpunkt-Menge bilden, speicherbar, beispielsweise in durch die Auswerte- und Steuereinheit bereitgestellten Speichermitteln.

Darüber hinaus ist auf dem Display eine Aufsichtdarstellung oder räumliche Darstellung von zumindest einigen Raumpunkten aus der Raumpunkt-Menge anzeigbar, wobei diese zumindest teilweise durch Linien verbunden sind.

Erfindungsgemäss weist nun das Vermessungsgerät eine Darstellungswechsel-Funktionalität aufweist, in deren Rahmen in Abhängigkeit von einer - aus den in der Aufsichtdarstellung bzw. der räumlichen Darstellung angezeigten Linien - benutzerseitig ausgewählten Linie automatisch gesteuert durch die Auswerte- und Steuereinheit
- eine virtuelle Fläche durch die ausgewählte Linie und eine als vertikal vorgegebene Richtung definiert wird,
- eine Untermenge von Raumpunkten aus der Raumpunkt-Menge selektiert wird, die innerhalb einer die virtuelle Fläche definiert umgebenden Pufferzone liegen, und
- eine Aufrissdarstellung von ausschliesslich solchen Raumpunkten, die zur Untermenge gehören, auf dem Display angezeigt wird.

Insbesondere werden im Rahmen der Aufrissdarstellung genau all diejenigen Raumpunkte darstellt, die zur Untermenge gehören, wobei diese auch in der Aufrissdarstellung zumindest teilweise durch Linien verbunden sein können.

Die Pufferzone kann sich dabei vor und hinter der virtuellen Fläche erstrecken bis hin zu einem definierten maximalen Abstand zur virtuellen Fläche, insbesondere wobei ein Wert für den maximalen Abstand fix vorgegeben oder benutzerseitig vorgebbar ist in einem Bereich zwischen 0 und 100 cm, im Speziellen in einem Bereich zwischen 10 und 50 cm.

Gemäss eines vorteilhaften Aspekts kann die erfindungsgemässe Darstellungswechsel-Funktionalität automatisch gestartet werden durch die benutzerseitige Auswahl - insbesondere durch doppeltes Anklicken anhand von Eingabemitteln - der einen Linie, woraufhin automatisch - insbesondere unmittelbar in Reaktion auf die benutzerseitige Auswahl - die virtuelle Fläche definiert, die Untermenge selektiert sowie in die Aufrissdarstellung gewechselt und auf dem Display angezeigt wird.

Die räumliche Darstellung ist dabei als eine dreidimensionale perspektivische Darstellung von Raumpunkten definiert.

Die Aufsichtdarstellung ist als eine zweidimensionale Darstellung von Raumpunkten - projiziert auf eine als horizontal ausgerichtet angenommene Ebene - definiert und die Aufrissdarstellung ist als eine zweidimensionale Darstellung von Raumpunkten - projiziert auf eine als vertikal ausgerichtet angenommene Ebene - definiert.

Insbesondere kann das Vermessungsgerät - insbesondere in die Basis integrierte - Neigungssensormittel aufweisen, die zur Bestimmung der Neigung gegenüber dem Erdschwerefeld-Vektor um zwei Achsen und zur Übermittlung deren Messdaten an die Auswerte- und Steuereinheit ausgebildet sind, sodass hierdurch die als vertikal vorgegebene Richtung definierbar bzw. messbar ist.

Alternativ kann die als vertikal vorgegebene Richtung auch abgeleitet werden durch eine Vorabeinmessung einer in bekannter äusserer Ausrichtung befindlichen Referenz, insbesondere zweier Punkte eines pendelnd aufgehängten Lotstabs bzw. Senklots oder einer als horizontal oder vertikal ausgerichtet angenommenen Referenzebene. Die Ableitung der äusseren Vertikalrichtung kann dann anhand der im Rahmen der Vorabeinmessung erhaltenen Daten durch die Auswerte- und Steuereinheit erfolgen.

Ein Wechsel von Aufsichtsdarstellung in Aufrissdarstellung ist durchaus üblich in CAD-Systemen, wie sie vornehmlich zu Konstruktionszwecken angewendet werden. Allerdings muss eine Änderung von in den unterschiedlichen Darstellungsweisen anzuzeigenden Punktmengen punktweise vom Benutzer entschieden und zugeordnet werden, und kann nicht durch eine einfache pauschale Selektion im Sinne einer abhängig von einer ausgewählten Linie definierten Pufferzone, wie sie erfindungsgemäss zur Anwendung kommt, vorgenommen werden. Folglich ist dieser punktweise Selektionsvorgang zeitaufwendig und entspricht nicht den Anforderungen an ein leicht zu bedienendes System, das zu Zwecken beispielsweise einer Aufmasserfassung nicht nur leicht verständlich, sondern auch zeiteffizient bedienbar sein muss. Insbesondere kann erfindungsgemäss erzielt werden, dass für einen Systembenutzer die Notwendigkeit vermieden werden kann, eine grosse Anzahl von Einzelpunkten individuell auszuwählen, allein um eine verbesserte Übersichtlichkeit einer kurzfristig gewählten Darstellung zu gewährleisten.

Vorzugsweise betragen die Abstände in horizontaler und/oder vertikaler Richtung von der die ausgewählten Raumpunkte verbindenden Linie zur Definition der Pufferzone für darin enthaltene vermessene Raumpunkte zur Darstellung in der zweidimensionalen Projektion zwischen 0 cm und 50 cm, besonders bevorzugt zwischen 0 cm und 20 cm.

Gemäss einer besonderen Ausführungsform der Erfindung enthält die Pufferzone aus einem an den ersten vermessenen Raum angrenzenden Raum vermessene Raumpunkte, deren dreidimensionale Koordinaten mit den dreidimensionalen Daten der vermessenen Raumpunkte des ersten vermessenen Raums korrelierbar und in der zweidimensionalen Projektion darstellbar sind. Dieses kann beispielsweise durch Vermessen von Raumpunkten an gemeinsamen Wänden von aneinander angrenzenden Räumen und Speicherung und Korrelation dieser Daten ermöglicht werden.

Ein weiterer Gegenstand der Erfindung ist ein Verfahren zum Darstellungswechsel von einer auf einem Display eines Vermessungsgeräts angezeigten Aufsichtdarstellung oder räumlichen Darstellung hin zu einer Aufrissdarstellung, wobei das Vermessungsgerät - wie zuvor beschrieben - aufweist:
- eine Basis,
- eine gegenüber der Basis dreh- und schwenkbaren, Distanzmessfunktionalität bereitstellenden Anzieleinheit mit einer zur Emission eines Laserstrahls in Richtung einer Zielachse ausgebildeten Laserquelle und einem Laserlichtdetektor,
- eine Auswerte- und Steuereinheit und
- ein Display,
wobei
- eine räumliche Ausrichtung der Anzieleinheit gegenüber der Basis über zwei Winkelmesser erfassbar ist,
- die mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen,
- eingegebene oder vermessenen Raumpunkte, die eine Raumpunkt-Menge bilden, gespeichert sind und
- die Aufsichtdarstellung bzw. räumliche Darstellung von zumindest einigen Raumpunkten aus der Raumpunkt-Menge angezeigt wird, wobei diese zumindest teilweise durch Linien verbunden sind.
Erfindungsgemäss werden im Rahmen des Verfahrens in Abhängigkeit von einer - aus den in der Aufsichtdarstellung bzw. der räumlichen Darstellung angezeigten Linien - benutzerseitig ausgewählten Linie automatisch
- eine virtuelle Fläche durch die ausgewählte Linie und eine als vertikal vorgegebene Richtung definiert wird,
- eine Untermenge von Raumpunkten aus der Raumpunkt-Menge selektiert wird, die innerhalb einer die virtuelle Fläche definiert umgebenden Pufferzone liegen, und
- eine Aufrissdarstellung von ausschliesslich solchen Raumpunkten, die zur Untermenge gehören, auf dem Display angezeigt wird.

Sämtliche eingangs beschriebene Weiterbildungen bezüglich des erfindungsgemässen Vermessungsgeräts sind analog auch auf das erfindungsgemässe Verfahren anwendbar.

So kann sich die Pufferzone wiederum vor und hinter der virtuellen Fläche erstrecken bis zu einem definierten maximalen Abstand zur virtuellen Fläche, insbesondere wobei ein Wert für den maximalen Abstand fix vorgegeben oder benutzerseitig vorgebbar ist in einem Bereich zwischen 0 und 100 cm, im Speziellen in einem Bereich zwischen 10 und 50 cm.

Des Weiteren können im Rahmen der Aufrissdarstellung genau sämtliche derjenigen Raumpunkte, die zur Untermenge gehören, dargestellt werden, wobei diese zumindest teilweise durch Linien verbunden sein können.

Im Speziellen kann ein automatischer Ablauf des Verfahren initiiert bzw. gestartet werden durch benutzerseitige Auswahl - insbesondere durch doppeltes Anklicken anhand von Eingabemitteln - der einen Linie, woraufhin automatisch - insbesondere unmittelbar in Reaktion auf die benutzerseitige Auswahl - die virtuelle Fläche definiert, die Untermenge selektiert sowie in die Aufrissdarstellung gewechselt und auf dem Display angezeigt wird.

Ein weiterer Gegenstand der Erfindung ist ein Computerprogrammprodukt mit Programmcode, der auf einem maschinenlesbaren Träger gespeichert ist, zur Durchführung des erfindungsgemässen Verfahrens zum Darstellungswechsel von einer auf einem Display eines Vermessungsgeräts angezeigten Aufsichtdarstellung oder räumlichen Darstellung hin zu einer Aufrissdarstellung von Raumpunkten aus einer gespeicherten Raumpunkte-Menge, nach einer der vorgenannten Ausführungsformen, insbesondere wenn das Programm auf einer als Auswerte- und Steuereinheit des erfindungsgemässen, oben beschriebenen Vermessungsgeräts ausgebildeten elektronischen Datenverarbeitungseinheit ausgeführt wird.

Das erfindungsgemässe Vermessungsgerät und das zugehörige Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Figur 1: eine erste Darstellung für eine mögliche Ausführungsform eines erfindungsgemässen Konstruktionsvermessungsgeräts;
- Figur 2: eine zweite Darstellung für eine mögliche Ausführungsform eines erfindungsgemässen Konstruktionsvermessungsgeräts;
- Figur 3: eine auf dem Display des Geräts angezeigte Aufsichtsdarstellung von gespeicherten und bereits vermessenen Punkten des Raumes;
- Figur 4: ein Beispiel für das Bestimmen der Pufferzone um die durch die ausgewählte Linie definierte Vertikalfläche;
- Figur 5: eine erfindungsgemäss auf dem Display des Geräts angezeigte Aufrissdarstellung von den ausschliesslich innerhalb der Pufferzone liegenden Raumpunkten;
- Figur 6: ein gemäss eines weiteren Aspekts der Erfindung ausgebildetes Vermessungssystem in der Anwendung; und
- Figur 7: Ausführungsbeispiele für Referenzpunkt-Marken des gemäss des weiteren Aspekts der Erfindung ausgebildeten Vermessungssystems.

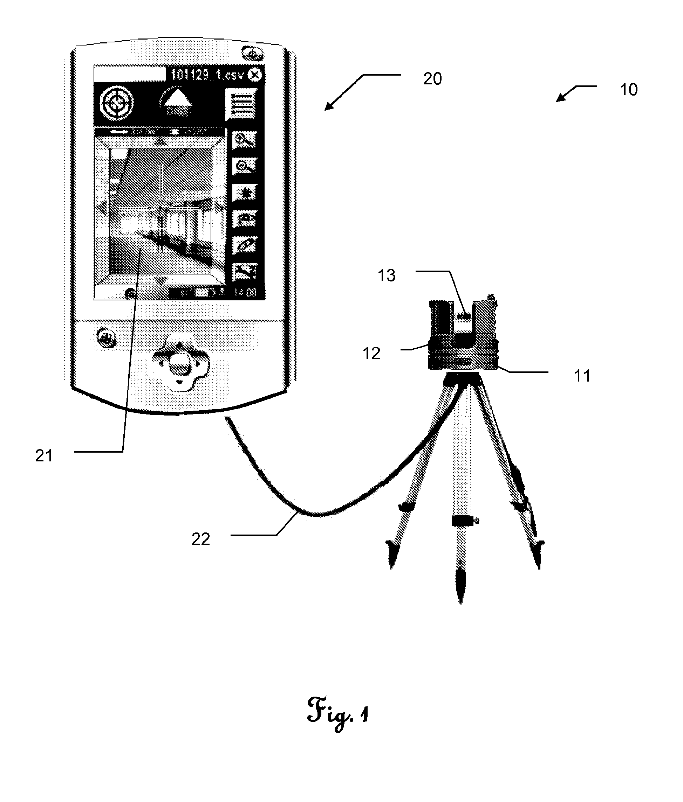

Figur 1 zeigt eine mögliche Ausführungsform eines erfindungsgemässen Konstruktionsvermessungsgeräts 10. Das System 10 umfasst eine Kontrolleinheit 20 mit einer integrierten Auswerte- und Steuereinheit zur Verarbeitung der Daten und mit einem berührungssensitiven Touch-Display 21 zur Anzeige von Daten/Kamerabilder und zur Markierung von Displaypunkten (und Eingabe von Befehlen). Die Kontrolleinheit 20 (als Benutzer-Gerät-Interface) und ein Laserlicht-Detektor bzw. Sensor kommunizieren miteinander. Die Kontrolleinheit 20 und der Laserlicht-Detektor bzw. Sensor können physisch getrennt und mittels drahtloser oder kabelgeführter Kommunikationsverbindungen 22 miteinander verbunden sein oder als eine Einheit bereitgestellt sein. Zur Ausrichtung des Laserstrahls 14 auf zu vermessende oder zu projizierende Raumpunkte kann mindestens der Laserstrahl 14 als ein Messstrahl selbst dienen. Zur Unterstützung eines Bedieners für die Anvisierung eines Raumpunkts kann das Konstruktionsvermessungsgerät 10 zusätzlich mit einer direkten optischen Anzielhilfe, z.B. einem Teleskop, ausgestattet sein.

Das Kamerabild, in welches im Rahmen eines Anzielmodus ein Fadenkreuz an jener Stelle im Bild eingeblendet sein kann, welche mit der Zielachse korrespondiert, dient somit insbesondere zur Anzielung der gewünschten Zielpunkte im Raum und kann z.B. auf dem Display einer handhaltbaren Fernsteuereinheit für das Konstruktionsvermessungsgerät angezeigt werden (insbesondere als Live-Video-Stream).

Wie dem Fachmann bekannt, kann die Auswerte- und Steuereinheit sowie das Display und die Eingabemittel entweder direkt an der Basis des Geräts angeordnet sein und/oder in eine handhaltbare Fernsteuereinheit integriert sein. Das Vermessungsgerät kann also beispielsweise ein die sensorischen Komponenten integrierendes Basisteil und - körperlich davon getrennt - eine Fernsteuereinheit aufweisen, die ihrerseits die Eingabemittel und das Display sowie insbesondere auch die Auswerte- und Steuereinheit bereitstellt.

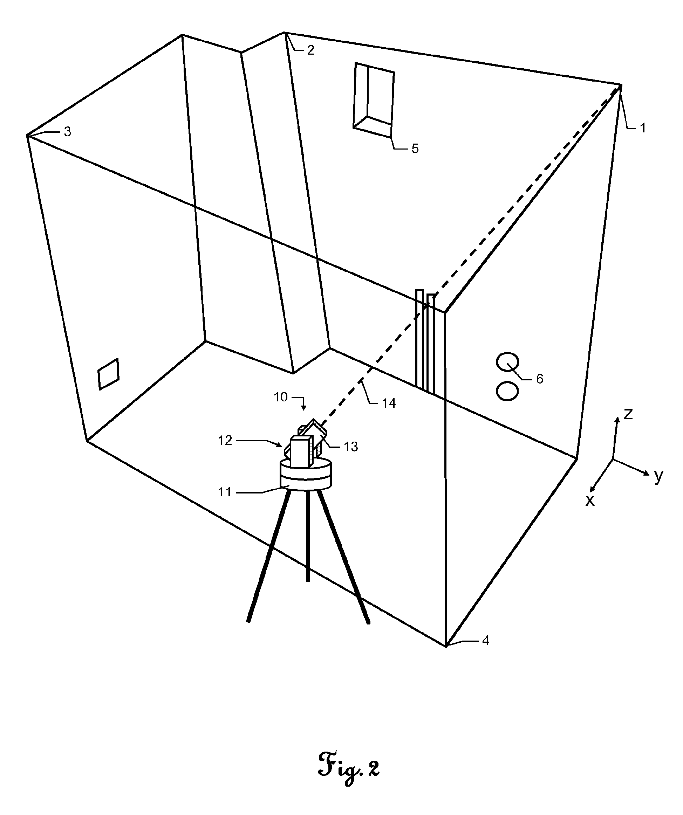

Erfindungsgemäss weist das Konstruktionsvermessungsgerät 10 eine zumindest halbautomatisch ablaufende Darstellungswechsel-Funktionalität auf, die jedoch insbesondere anhand der Figuren 2 bis 5 illustriert wird.

Figur 2 zeigt ein erfindungsgemässes Vermessungsgerät 10 zum Vermessen und/oder Markieren von Raumpunkten von Oberflächen einer Konstruktion, insbesondere von Innenräumen von Gebäuden.

Das Konstruktionsvermessungsgerät 10 umfasst eine Basis 11, die beispielsweise auf einem dreibeinigen Stativ steht, mit einem darauf drehbar gelagerten Oberteil 12. Eine am Oberteil 12 schwenkbar gelagerte Anzieleinheit 13 ist mit einer zu einer Emission eines Laserstrahls 14 ausgebildeten Laserquelle und einem Laserlicht-Detektor als Entfernungsbestimmungsdetektor ausgestattet und stellt damit eine Distanzmessfunktionalität bereit. Die Anzieleinheit 13 kann optional des Weiteren mit einer integrierten digitalen Kamera ausgestattet sein.

Somit ist also die Anzieleinheit 13 gegenüber der Basis 11 dreh- und schwenkbar (insbesondere also um eine vertikale Stehachse drehbar und um eine horizontale Schwenkachse schwenkbar bzw. neigbar).

Das Konstruktionsvermessungsgerät 10 umfasst ausserdem eine vereinfachungshalber nicht dargestellte Auswerte- und Steuereinheit, wobei - ebenfalls nicht dargestellt - ein erster und ein zweiter Drehantrieb das Oberteil 12 bzw. die Anzieleinheit 13 antreibbar bzw. in einem Azimut- und einem Elevationswinkel ausrichtbar machen. Die räumliche Ausrichtung der Anzieleinheit 13 gegenüber der Basis 11 ist über zwei Winkelmesser erfassbar. Die Auswerte- und Steuereinheit ist mit der Laserquelle, dem Laserlicht-Detektor und den Winkelmessern - sowie gegebenenfalls den Neigungssensoren - verbunden, um eine erfasste Distanz und erfasste Azimut- und Elevationswinkel einer entsprechenden Ausrichtung der Anzieleinheit 13 zuzuordnen und somit Koordinaten für Raumpunkte zu bestimmen.

Ist eine Kamera vorhanden, so kann der jeweils aktuell mit der Zielachse 13 bzw. dem Laserstrahl 14 anvisierte Raumpunkt dabei im Betriebszustand auf dem Display in einem aufgenommenen Kamera-Bild dargestellt werden (in einem Ziel-Bildpunkt), insbesondere indiziert anhand eines darstellbaren Fadenkreuzes.

Das Kamerabild, in welches also das Fadenkreuz an jener Stelle im Bild eingeblendet sein kann, welche mit der Zielachse korrespondiert, dient somit insbesondere zur Anzielung der gewünschten Zielpunkte im Raum und kann z.B. auf dem Display einer handhaltbaren Fernsteuereinheit für das Konstruktionsvermessungsgerät angezeigt werden (insbesondere als Live-Video-Stream).

Wie dem Fachmann bekannt, kann die Auswerte- und Steuereinheit sowie das Display und die Eingabemittel entweder direkt an der Basis des Geräts angeordnet sein und/oder in eine handhaltbare Fernsteuereinheit integriert sein (wie bereits im Rahmen der Beschreibung von Figur 1 erwähnt). Das Vermessungsgerät kann also (entweder ausschliesslich oder zusätzlich zu einem User-Interface mit Display und Eingabemitteln, das direkt an der Basis angeordnet sein kann) eine Fernsteuereinheit mit Eingabemitteln und dem Display aufweisen.

Zusätzlich kann das Vermessungsgerät 10 - insbesondere in die Basis 11 des Geräts 10 integriert - optional mit Neigungssensormittel ausgestattet sein, deren Messdaten dann ebenfalls an die Auswerte- und Steuereinheit übermittelt werden. Damit kann zusätzlich die aktuelle Aufstell-Ausrichtung bzw. Horizontalität des Geräts 10 (d.h. eine Neigung der Basis 11) bezüglich des Schwerefeld-Vektors der Erde bestimmt und zur, insbesondere rechnerischen, Kompensation einer nicht exakt horizontal erfolgten Aufstellung des Geräts 10 verwendet werden. Wie dem Fachmann bekannt, können die Neigungssensormittel dabei dazu ausgebildet sein, die Neigung gegenüber dem Schwerefeld (bzw. gegenüber einer senkrecht zum Schwerefeld ausgerichteten Horizontalebene) in zwei Richtungen (d.h. um zwei Achsen) zu bestimmen. Beispielsweise können dafür zwei ein-achsige Neigungssensoren oder ein zwei-achsiger Neigungssensor verwendet werden (wie optoelektronische Libellensensoren, ein optoelektronischer Öltopf oder eine optoelektronische Dosenlibelle). Ein Beispiel für einen solchen öltopfartigen Neigungssensor, mit welchem die Neigung zumindest um zwei Achsen bestimmen kann, ist detailliert in der Europäischen Patentanmeldung mit der Anmeldenummer EP 10173726.0 beschrieben.

Figuren 2, 3, 4 und 5 zeigen in der Zusammenschau die Vermessung eines Raumes mit mehreren Wänden und die Anwendung der erfindungsgemässen Funktionalität bzw. des erfindungsgemässen Verfahrens, wobei beispielsweise die Raumpunkte 1, 2, 3, 4 bereits vermessen und gespeichert sind sowie weitere Raumpunkte 5, 6 benutzerseitig eingegeben wurden (z.B. durch Überspielen von externen Designdaten auf die Auswerte- und Steuereinheit) und dort gespeichert sind.

Erfindungsgemäss weist das Konstruktionsvermessungsgerät 10 eine Darstellungswechsel-Funktionalität auf, in deren Rahmen abhängig von einer benutzerseitig gewählten Linie von den in der Aufsichtdarstellung (A) bzw. der räumlichen Darstellung angezeigten Linien automatisch gesteuert durch die Auswerte- und Steuereinheit
- eine durch die ausgewählte Linie und eine als vertikal vorgegebene Richtung definiert wird,
- eine Untermenge von Raumpunkten (1, 2, 3, 4) aus der Raumpunkt-Menge selektiert wird, die innerhalb einer die virtuelle Fläche definiert umgebenden Pufferzone (7) liegen, und
- eine Aufrissdarstellung (B) von ausschliesslich solchen Raumpunkten (1, 2, 3, 4), die zur Untermenge gehören, auf dem Display angezeigt wird.

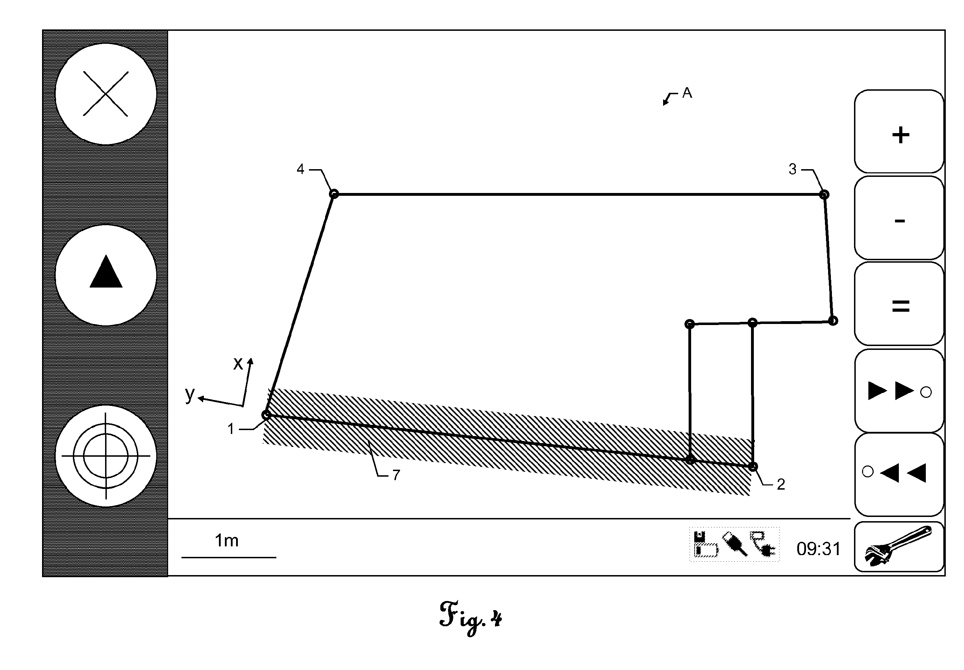

D.h., es werden in der Aufrissdarstellung (B) nur innerhalb einer - durch fix vorgegebene (oder vorgebbare) Abstände von der die ausgewählte Linie enthaltenden Fläche - definierten Pufferzone 7 (siehe Figur 4) befindliche Raumpunkte dargestellt. Jene Raumpunkte aus der gesamten Raumpunkt-Menge bzw. jene in der Ausgangsdarstellung illustrierten Raumpunkte, die nicht innerhalb dieser Pufferzone liegen, werden vor Wechsel in die Aufrissdarstellung (B) herausgefiltert und dort nicht dargestellt.

Die Pufferzone 7 (siehe Figur 4) erstreckt sich vor und hinter der virtuellen Fläche bis hin zu einem definierten maximalen Abstand von der virtuellen Fläche, insbesondere wobei ein Wert für den maximalen Abstand fix vorgegeben oder benutzerseitig vorgebbar ist in einem Bereich zwischen 0 und 100 cm, im Speziellen in einem Bereich zwischen 10 und 50 cm.

Erfindungsgemäss kann nun also sowohl die Ausrichtung als auch die Art der Darstellungsform von Raumpunkten einer gespeicherten Raumpunkt-Menge, sowie insbesondere dazu auch die Selektion der für den Aufriss B auszuwählenden Punkte, in einem einzigen Benutzer-Arbeitsschritt erfolgen, wobei der gesamte Vorgang einzig durch die benutzerseitige Auswahl der gewünschten Linie hinreichend definiert ist.

Diese - für den Benutzer einfach zu bedienende - Funktionalität zum Wechsel zwischen unterschiedlichen Darstellungsweisen eines Raumes ist vor allem vorgesehen für Benutzung durch einen regulären Handwerker, insbesondere also geeignet für in der Vermessungstechnik nicht speziell vorgebildete oder erfahrene Personen.

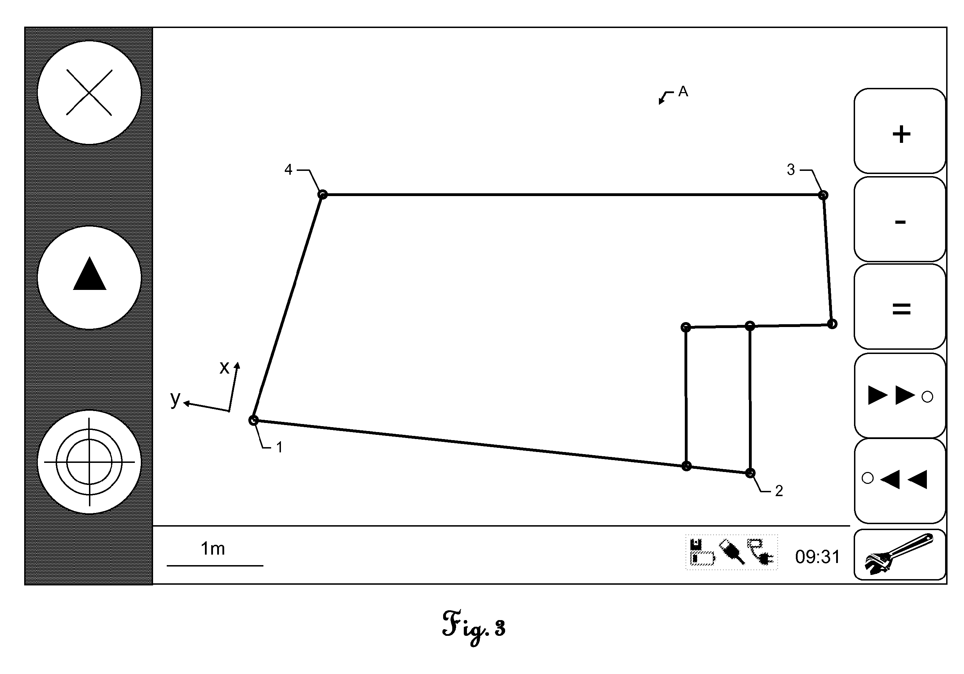

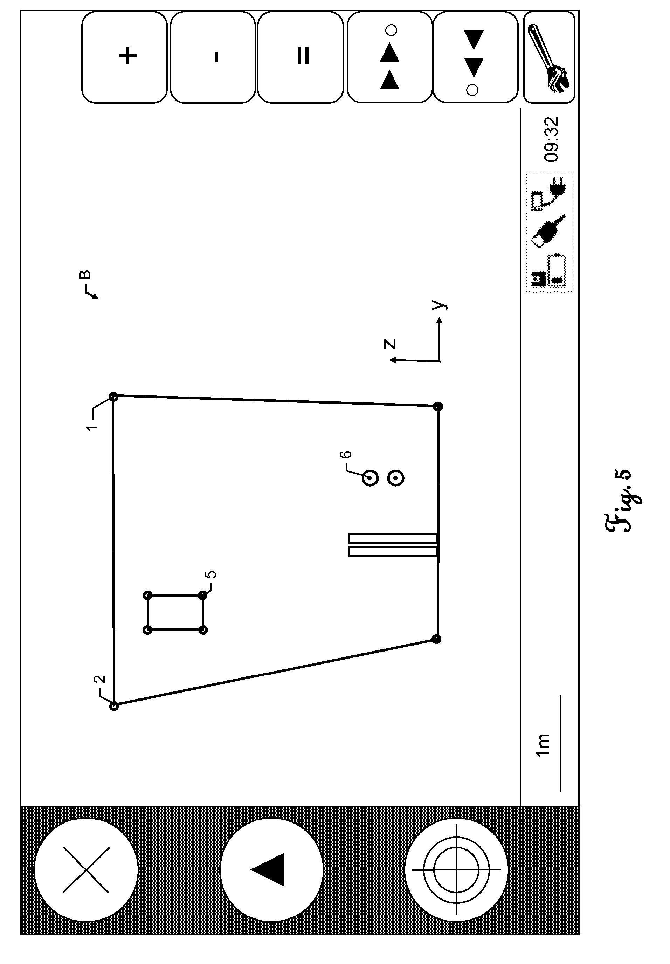

Ausgangssituation für diese neu vorgesehene Funktionalität ist, dass konventionelle Geräte mit herkömmlichen Darstellungsmöglichkeiten der Vermessungsdaten üblicherweise eine für einen Benutzer sehr unübersichtliche Überlagerung von in gemeinsamen vertikalen Ebenen liegenden Raumpunkten (z.B. Decke und Boden) mit in gemeinsamen horizontalen Ebenen liegenden Raumpunkten (z.B. auf unterschiedlichen Wänden) präsentieren. Die neue Entfaltungsfunktionalität ermöglicht es einem Bediener, zwischen Ansicht von oben ("Aufsicht A", gemäss Figur 3) und seitlicher bzw. frontaler Ansicht ("Aufriss B", gemäss Figur 5) der gespeicherten Vermessungsdaten zu wechseln, insbesondere durch Auswahl einer vermessene Raumpunkte 1, 2 verbindenden Linie, welche in der Aufrissdarstellung B enthalten sein soll.

Vorteil der Erfindung ist also die rasche Visualisierung der Messgeometrie aus unterschiedlichen Ansichten nämlich Aufsicht (A) und Aufriss (B), wobei insbesondere die Selektion der im Aufriss (B) - um Unübersichtlichkeit zu vermeiden - darzustellenden Punke automatisch durch Heranziehung einer vorgegebenen Pufferzone ausgeführt wird. Somit können dreidimensionale Daten, wie sie sich z.B. aus dem Aufmass eines Innenraumes ergeben, in zwei übersichtliche zweidimensionale Ansichten überführt werden.

Ansicht A (Aufsichtdarstellung) ist gekennzeichnet durch orthogonale Projektion der Punkte in eine horizontale Ebene, wobei ein Bezug zur äusseren Vertikal- oder Horizontalrichtung z.B. hergestellt werden kann durch die zuvor beschriebenen Neigungssensormittel oder durch vorheriges Einmessen einer als präzise vertikal ausgerichtet oder präzise horizontal ausgerichtet angenommenen äusseren Referenz.

Die Aufsichtdarstellung A kann also als eine zweidimensionale Darstellung von Raumpunkten - projiziert auf eine als horizontal ausgerichtet angenommene Ebene - bezeichnet werden.

Ansicht B (Aufrissdarstellung) ist gekennzeichnet durch orthogonale Projektion der Punkte in eine Ebene, die die Z-Achse des Koordinatensystems enthält.

Die Aufrissdarstellung B kann also als eine zweidimensionale Darstellung von Raumpunkten - projiziert auf eine als vertikal ausgerichtet angenommene Ebene - bezeichnet werden.

Des Weiteren wird die 2D-Aufrissdarstellung B durch eine von einem Benutzer auszuwählende Linie, beispielsweise die Verbindungslinie zwischen den Raumpunkten 1 und 2, vorgegeben. Insbesondere kann diese Linie beispielsweise die Kante einer Wand darstellen, die näherungsweise horizontal verläuft.

Die in Figur 2 in der Aufsichtdarstellung A angezeigte Linie von Punkt 1 zu Punkt 2 könnte zum Beispiel vom Nutzer ausgewählt werden durch Selektion in der graphischen Benutzeroberfläche (graphical user interface GUI) mittels Pfeiltasten (bzw. einem Trackball, einem Touch-Pad, einem Trackpoint [Pointing Stick], etc.) oder durch Berühren (Antippen) auf einem Touchscreen, oder durch eine andere, einer GUI angemessenen Art und Weise.

Automatisch wechselt daraufhin nun die Aufsichtsdarstellung A (Figur 3) hin zur Aufrissansicht B (Figur 5), und nutzt die selektierte Linie zwischen den Punkten 1 und 2 als die Ansicht B bestimmende Richtung (d.h. in diesem Fall von der gegenüberliegenden Wand des in Figur 2 dargestellten Raumes aus gesehen). Gleichzeitig werden nur diejenigen Raumpunkte 1, 2, 5, 6 angezeigt, die innerhalb der Pufferzone liegen, welche bis zu einem definierten maximalen Abstand die - die Linie 1-2 enthaltende - Vertikalfläche umgibt. Dabei ist die Pufferzone 7 in diesem Fall definiert als der Raumbereich, der sich bis zu einem festen maximalen Abstand von z.B. 20 cm vor und hinter der die Linie 1-2 enthaltenden Vertikalfläche erstreckt. Die Pufferzone 7 ist also in diesem Fall eine sich in vertikaler Richtung erstreckende Säule mit der in Figur 4 schraffiert illustrierten Rechtecks-Fläche 7 als Querschnittsfläche der Säule, wobei die Rechtecks-Fläche 7 derart die Linie 1-2 umgibt, dass die Linie 1-2 die Mittelsenkrechte (auch Seitensymmetrale genannt) der beiden Längsseiten der Rechtecks-Fläche 7 bildet und der Abstand von den beiden Längsseiten zur Linie 1-2 dem vorgegebenen (oder vorgebbaren) Abstand entspricht.

Ohne eine solche Selektion mithilfe der Pufferzone wäre die Aufrissansicht B unübersichtlich. Zum Beispiel würden dann die Punkte 3 und 4 von der gegenüberliegenden Wand - im Falle einer Aufrissdarstellung von allen erfassten Raumpunkten - auch dargestellt werden, was den Nutzen eines Ansichtswechsels hinsichtlich der Ablesbarkeit von Informationen über vermessene Raumpunkte beeinträchtigen und den Aufmass-Prozess verzögern könnte.

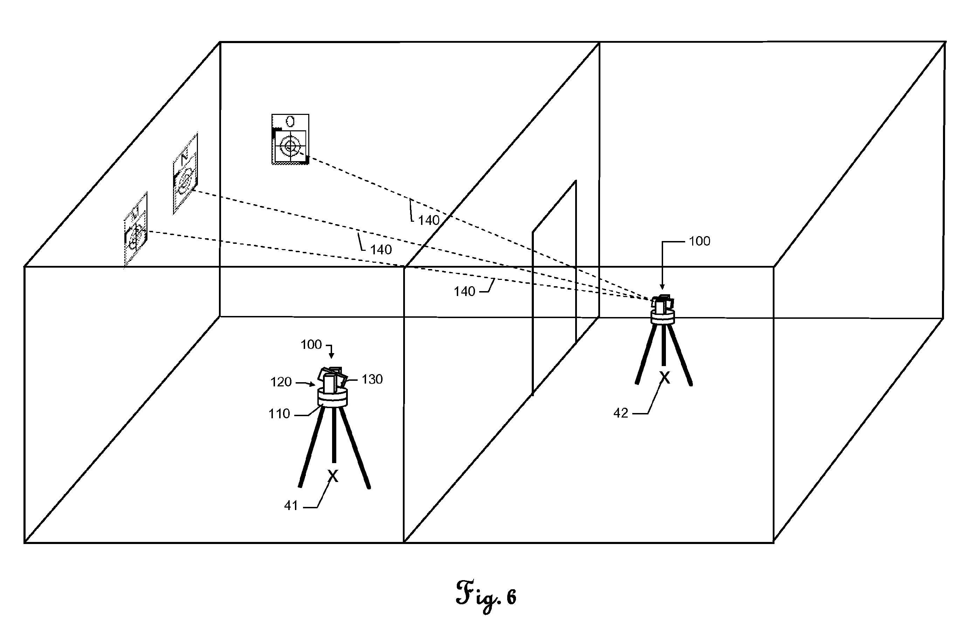

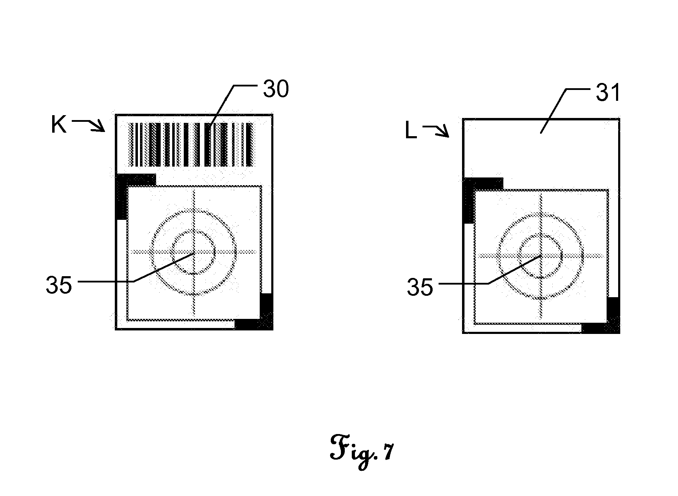

Figuren 6 und 7 beziehen sich auf einen weiteren Aspekt der Erfindung, welcher optional mit der oben beschriebenen Vermessungsvorrichtung bzw. dem oben beschriebenen Verfahren kombinierbar ist, jedoch auch völlig getrennt von der oben beschriebenen erfindungsgemässen Darstellungswechsel-Funktionalität Anwendung finden kann.

Figur 6 zeigt ein gemäss diesem weiteren Aspekt der Erfindung ausgebildetes System aus einem Konstruktionsvermessungsgerät 100 und drei in Räumen anbringbaren Referenzpunkt-Marken M,N,O. In diesem System aus einem Konstruktionsvermessungsgerät 100 zum Vermessen und Markieren von Raumpunkten im Rahmen von Bau und/oder Ausbau - insbesondere Innenausbau - von Gebäuden und mindestens drei in Räumen anbringbaren Referenzpunkt-Marken K,L,M,N,O, die jeweils ein bekanntes, einen diskreten Referenzpunkt indizierendes Muster 30 aufweisen, weist das Konstruktionsvermessungsgerät eine Basis 110 und ein an der Basis 110 um eine Drehachse drehbar gelagertes Oberteil 120 auf. Weiterhin ist eine am Oberteil 120 um eine Schwenkachse schwenkbar gelagerte, Distanzmessfunktionalität bereitstellende Anzieleinheit 130 mit einer zur Emission eines Laserstrahls 140 in Richtung einer Zielachse ausgebildeten Laserquelle und einem Laserlicht-Detektor sowie mit einer in Richtung der Zielachse ausgerichteten integrierten digitalen Kamera vorgesehen. Darüber hinaus weist das Konstruktionsvermessungsgerät 100 eine Auswerte- und Steuereinheit mit Bildverarbeitungs- und Speichermitteln auf. Dabei machen ein erster und ein zweiter Drehantrieb das Oberteil 120 bzw. die Anzieleinheit 130 antreib- und ausrichtbar und eine räumliche Ausrichtung der Anzieleinheit gegenüber der Basis 110 über zwei Winkelmesser ist erfassbar. Weiters ist die Auswerte- und Steuereinheit mit der Laserquelle, dem Laserlicht-Detektor sowie den Winkelmessern derart verbunden, dass eine erfasste Distanz einer entsprechenden Ausrichtung zuordenbar ist und somit Relativ-Koordinaten für Raumpunkte bestimmbar sind. Gemäss dem weiteren Aspekt der Erfindung weist das Konstruktionsvermessungsgerät 100 nun eine Referenzierungsfunktionalität zur Referenzierung des eigenen aktuellen Standorts 42 und der eigenen aktuellen Orientierung gegenüber den in Sicht- und Anmessweite des Konstruktionsvermessungsgeräts 100 befindlichen Referenzpunkten auf, deren Absolut-Positionen in einem gewünschten Koordinatensystem bekannt, insbesondere von einem vorherigen Standort 41 aus bereits eingemessen und gespeichert, sind, wobei im Rahmen der Referenzierungsfunktionalität nach Auslösung automatisch gesteuert durch die Auswerte- und Steuereinheit ein Erfassen von mehreren Kamera-Bildern in unterschiedlichen Ausrichtungen der Anzieleinheit 130 innerhalb eines definierten Absuch-Sichtfeldbereichs, und ein Auswerten der erfassten Kamera-Bilder durch Bildverarbeitung hinsichtlich eines Erkennens von den Referenzpunkt-Marken K,L,M,N,O in den erfassten Kamera-Bildern anhand von deren jeweils bekannten Mustern abläuft. Zusätzlich erfolgt ein Bestimmen der jeweiligen Bild-Positionen der erkannten Referenzpunkt-Marken K,L,M,N,O in den erfassten Kamera-Bildern, und ein Ableiten von Raumwinkeln zu den durch die in den Kamera-Bildern erkannten Referenzpunkt-Marken K,L,M,N,O jeweils indizierten Referenzpunkten anhand von den jeweiligen Bild-Positionen der Referenzpunkt-Marken K,L,M,N,O und der jeweiligen Ausrichtung der Anzieleinheit 130, in welcher das jeweilige Kamera-Bild erfasst ist. Ebenfalls erfolgt ein sukzessives Anfahren der für die Referenzpunkte jeweils abgeleiteten Raumwinkel und Bestimmen der jeweiligen Relativ-Koordinaten der Referenzpunkte und ein Referenzieren des eigenen aktuellen Standorts 42 und der eigenen aktuellen Orientierung gegenüber den Referenzpunkten anhand von den für die Referenzpunkte im gewünschten Koordinatensystem jeweils bekannten Absolut-Positionen und den für die Referenzpunkte jeweils bestimmten Relativ-Koordinaten.

In dem System können die Referenzpunkt-Marken K,L,M,N,O jeweils einen Musterträger aufweisen, auf welchem das bekannte Muster aufgebracht 30, insbesondere aufgedruckt, ist und einen auf dem Musterträger vorgesehener Identifikationsbereich zur Kenntlichmachung der eigenen, individuellen Identität der jeweiligen Referenzpunkte auf, insbesondere wobei der Identifikationsbereich als eine aufgedruckte Identifizierungsnummer oder als ein Barcode oder als ein zur händischen Beschriftung vorgesehenes Freifeld 31 ausgeführt ist.

Insbesondere kann mit dem System im Rahmen der Referenzierungsfunktionalität zusätzlich zum Schritt des Bestimmens der jeweiligen Bild-Positionen ein Bestimmen der jeweiligen Identitäten der Referenzpunkte durch Auslesung der jeweiligen Identifikationsbereiche der in den erfassten Kamera-Bildern erkannten Referenzpunkt-Marken K,L,M,N,O anhand von Bildverarbeitung, sowie ein paarweises Zuordnen der Absolut-Positionen und der Relativ-Koordinaten für die jeweiligen Referenzpunkte unter Zuhilfenahme der bestimmten Identitäten der Referenzpunkte erfolgen.

Weiterhin kann im Rahmen der Referenzierungsfunktionalität ein paarweises Zuordnen der Absolut-Positionen und der Relativ-Koordinaten für die jeweiligen Referenzpunkte entsprechend einer Methode aus der Veröffentlichungsschrift WO 2008/138541, wobei anhand einer räumlichen Verteilung bekannter Messpunkte eine Referenzierung eines Vermessungsgeräts 100 durchgeführt werden kann, erfolgen.

Zusätzlich kann im Rahmen der Referenzierungsfunktionalität für die Schritte des sukzessiven Anfahrens und des jeweiligen Bestimmens der Relativ-Koordinaten der Referenzpunkte eine Feinanziel-Methode gemäss der Europäischen Patentanmeldung mit der Anmeldenummer 10168771.3 zur Anwendung kommen, wobei anhand eines bekannten Musters 30 eine Referenzpunkt-Marke K,L,M,N,O mittels Bildverarbeitung erkannt und die Anzieleinheit auf eine Zielpunkt, der in einem bekannten räumlichen Verhältnis zu diesem Muster liegt, automatisch ausgerichtet werden kann.

Insbesondere kann ein Konstruktionsvermessungsgerät 100, das zur Verwendung in einem oben beschriebenen System ausgebildet und vorgesehen ist, also eine Basis 110, ein an der Basis 110 um eine Drehachse drehbar gelagerten Oberteil 120, eine am Oberteil 120 um eine Schwenkachse schwenkbar gelagerten, Distanzmessfunktionalität bereitstellenden Anzieleinheit 130 mit einer zur Emission eines Laserstrahls 140 in Richtung einer Zielachse ausgebildeten Laserquelle und einem Laserlicht-Detektor sowie mit einer in Richtung der Zielachse ausgerichteten integrierten digitalen Kamera, und eine Auswerte- und Steuereinheit mit Bildverarbeitungs-und Speichermitteln aufweisen. Ein erster und ein zweiter Drehantrieb machen dabei das Oberteil 120 bzw. die Anzieleinheit 130 antreib- und ausrichtbar, eine räumliche Ausrichtung der Anzieleinheit gegenüber der Basis 110 ist über zwei Winkelmesser erfassbar und die Auswerte- und Steuereinheit ist mit der Laserquelle, dem Laserlicht-Detektor sowie den Winkelmessern verbunden, um eine erfasste Distanz einer entsprechenden Ausrichtung zuzuordnen und somit Relativ-Koordinaten für Raumpunkte zu bestimmen. Das Konstruktionsvermessungsgerät 100 weist eine Referenzierungsfunktionalität zur Referenzierung des eigenen aktuellen Standorts 42 und der eigenen aktuellen Orientierung gegenüber von - durch jeweils bekannte Muster von in Sicht- und Anmessweite des Konstruktionsvermessungsgeräts 100 befindlichen Referenzpunkt-Marken indizierten - Referenzpunkten auf, deren Absolut-Positionen in einem gewünschten Koordinatensystem bekannt, insbesondere von einem vorherigen Standort 41 aus bereits eingemessen und gespeichert, sind, wobei im Rahmen der Referenzierungsfunktionalität nach Auslösung automatisch gesteuert durch die Auswerte- und Steuereinheit ein Erfassen von mehreren Kamera-Bildern in unterschiedlichen Ausrichtungen der Anzieleinheit 130 innerhalb eines definierten Absuch-Sichtfeldbereichs, und ein Auswerten der erfassten Kamera-Bilder durch Bildverarbeitung hinsichtlich eines Erkennens von den Referenzpunkt-Marken in den erfassten Kamera-Bildern anhand von deren jeweils bekannten Mustern, abläuft. Weiters erfolgt ein Bestimmen der jeweiligen Bild-Positionen der erkannten Referenzpunkt-Marken in den erfassten Kamera-Bildern und ein Ableiten von Raumwinkeln zu den durch die in den Kamera-Bildern erkannten Referenzpunkt-Marken jeweils indizierten Referenzpunkten anhand von den jeweiligen Bild-Positionen der Referenzpunkt-Marken und der jeweiligen Ausrichtung der Anzieleinheit 130, in welcher das jeweilige Kamera-Bild erfasst ist. Zusätzlich läuft ein sukzessives Anfahren der für die Referenzpunkte jeweils abgeleiteten Raumwinkel und Bestimmen der jeweiligen Relativ-Koordinaten der Referenzpunkte und ein Referenzieren des eigenen aktuellen Standorts 42 und der eigenen aktuellen Orientierung gegenüber den Referenzpunkten anhand von den für die Referenzpunkte im gewünschten Koordinatensystem jeweils bekannten Absolut-Positionen und den für die Referenzpunkte jeweils bestimmten Relativ-Koordinaten ab.

Figur 7 zeigt ein mögliches Ausführungsbeispiel für zwei Referenzpunkt-Marken K,L mit einem Muster 30 bzw. einem Freifeld 31, in welchem ein Benutzer ein individuelles Muster anbringen, insbesondere aufmalen, kann. Mit einem System aus einem Konstruktionsvermessungsgerät 100 und Referenzpunkt-Marken K,L können in einem Suchmodus ein Raum visuell abgetastet werden (Kamerabild) und mithilfe von Bildverarbeitung nach Referenzpunkt-Marken K,L in Reichweite gesucht und diese angemessen werden. Dazu wird beispielsweise ein in der Datenverarbeitung gespeichertes digitales Muster 30 einer Referenzpunkt-Marke K durch Autokorrelationstechnik mit den Kamerabildern verglichen. Ebenso kann die Anzielung durch das System automatisch vorgenommen werden, indem eine Autokorrelation ein Maximum einer Muster-Bild-Korrelation bestimmt und an einer Stelle, welche in einem bekannten räumliche Bezug zu einem Muster 30 z.B. einem Barcode steht, eine Distanzmessung durchführt werden. Dabei kann bei der automatischen Suche des in der Datenbank abgelegten Referenzpunkts 35 eine Erkennung des Barcodes 30 erfolgen. Des Weitern kann sich das Such- und Anzielverfahren ab einem dritten Referenzpunkt 35 vereinfachen, und zu einem selektiven Suchen übergegangen werden (d.h. unter Treffen von Vorannahmen), da aus einem bereits durch zwei erste Referenzpunkte 35 bestimmten vorläufigen Standpunkt die Suche auf die in der Nähe befindlichen Referenzpunkte 35 eingeschränkt werden kann. Prinzipiell ist diese Suche auch ohne vorkodierte Referenzpunkt-Marken K möglich. Hierfür wird seitens des Nutzers z.B. eine handschriftliche Kennzeichnung in dem Freifeld 31 der Referenzpunkt-Marken L angebracht. Dies bedingt, dass bei der Ablage der Koordinaten des Kontrollpunkts 35 ein Bild der vom Nutzer angebrachten Kennung erfasst und mitgespeichert wird.

Wie bereits erwähnt ist jedoch auch ohne irgendeine - die eindeutige Identifikation ermöglichende - Kennung der Messmarke prinzipiell eine allgemeine Suche nach den Referenzpunkten aus der Datenbank der potentiellen Referenzpunkte durch Vergleich der gemessenen Ist-Distanzen zwischen den - nach Standortwechsel neu eingemessenen - Referenzpunkten mit den Soll-Distanzen zwischen den gespeicherten Referenzpunkten möglich, die sich aus den Datenbankkoordinaten ergeben, analog zur in der Veröffentlichungsschrift WO 2008/138541 beschriebenen Methode.

Sollte sich ein zweites solches Vermessungsgerät im Raum befinden, das in gleicher Geometrie stationiert wurde und nicht umpositioniert wurde, können die Geräte durch gegenseitiges Anmessen die Station des umpositionierten Geräts wieder herstellen. Soll dies automatisch erfolgen, bedarf es der Zwei-Wege-Kommunikation der Geräte untereinander. Lediglich für die Redundanz und damit auch für die Genauigkeit und Zuverlässigkeit des Bestimmens der neuen Station - d.h. des neuen Standpunkts des umpositionierten Geräts - ist dann überhaupt ein Anzielen von im zuvor definierten Koordinatensystem bekannt positionierten Referenzpunkten noch nötig. In diesem Falle vereinfacht sich das Suchverfahren nach den bekannten Referenzpunkten erheblich, weil dann wiederum - wie bereits zuvor beschrieben - eine selektive Suche nach den Referenzpunkten (d.h. unter Berücksichtigung des vorläufig bestimmten Standpunkts des umpositionierten Geräts) angewendet werden kann. Somit kann also die Suche auf die in der Nähe befindlichen Referenzpunkte 35 eingeschränkt werden bzw. können bereits grobe neue Relativ-Positionen - d.h. vom vorläufig bestimmten Standpunkt aus betrachtet - für die bekannten Referenzpunkte bestimmt und für die Suche miteinbezogen werden.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vermessungsgerät (10) zum Vermessen und insbesondere Markieren von Raumpunkten (1, 2, 3, 4, 5, 6) einer Konstruktion - insbesondere Innenräumen von Gebäuden - mit
• einer Basis (11),
• einer gegenüber der Basis dreh- und schwenkbaren, Distanzmessfunktionalität bereitstellenden Anzieleinheit (13) mit einer zur Emission eines Laserstrahls (14) in Richtung einer Zielachse ausgebildeten Laserquelle und einem Laserlicht-detektor,
• einer Auswerte- und Steuereinheit und
• einem Display,
wobei
• eine räumliche Ausrichtung der Anzieleinheit (13) gegenüber der Basis (11) über zwei Winkelmesser erfassbar ist,
• die Auswerte- und Steuereinheit mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen,
• eingegebene oder vermessenen Raumpunkte (1, 2, 3, 4, 5, 6), die eine Raumpunkt-Menge bilden, speicherbar sind und
• eine Aufsichtdarstellung (A) oder räumliche Darstellung von zumindest einigen Raumpunkten (1, 2, 5, 6) aus der Raumpunkt-Menge anzeigbar ist, wobei diese zumindest teilweise durch Linien verbunden sind,
**dadurch gekennzeichnet, dass** das Vermessungsgerät (10) eine Darstellungswechsel-Funktionalität aufweist, in deren Rahmen in Abhängigkeit von einer - aus den in der Aufsichtdarstellung (A) bzw. der räumlichen Darstellung angezeigten Linien - benutzerseitig ausgewählten Linie automatisch gesteuert durch die Auswerte- und Steuereinheit
• eine virtuelle Fläche durch die ausgewählte Linie und eine als vertikal vorgegebene Richtung definiert wird,
• eine Untermenge von Raumpunkten (1, 2, 3, 4) aus der Raumpunkt-Menge selektiert wird, die innerhalb einer die virtuelle Fläche definiert umgebenden Pufferzone (7) liegen, und
• eine Aufrissdarstellung (B) von ausschliesslich solchen Raumpunkten (1, 2, 3, 4), die zur Untermenge gehören, auf dem Display angezeigt wird.

2. Vermessungsgerät (10) nach Anspruch 1,
**dadurch gekennzeichnet, dass**
• sich die Pufferzone vor und hinter der virtuellen Fläche erstreckt bis zu einem definierten maximalen Abstand zur virtuellen Fläche, insbesondere wobei ein Wert für den maximalen Abstand fix vorgegeben oder benutzerseitig vorgebbar ist in einem Bereich zwischen 0 und 100 cm, im Speziellen in einem Bereich zwischen 10 und 50 cm,
und/oder
• im Rahmen der Aufrissdarstellung (B) genau all diejenigen Raumpunkte (1, 2, 3, 4), die zur Untermenge gehören, darstellt werden, wobei diese zumindest teilweise durch Linien verbunden sind.

3. Vermessungsgerät (10) nach Anspruch 1 oder 2,
**dadurch gekennzeichnet, dass**
durch benutzerseitige Auswahl - insbesondere durch doppeltes Anklicken anhand von Eingabemitteln - der einen Linie die Darstellungswechsel-Funktionalität automatisch gestartet wird und daraufhin automatisch - insbesondere unmittelbar in Reaktion auf die benutzerseitige Auswahl - die virtuelle Fläche definiert, die Untermenge selektiert sowie in die Aufrissdarstellung (B) gewechselt und auf dem Display angezeigt wird.

4. Vermessungsgerät (10) nach einem der Ansprüche 1 bis 3,
**dadurch gekennzeichnet, dass**
• die räumliche Darstellung als eine dreidimensionale perspektivische Darstellung von Raumpunkten,
• die Aufsichtdarstellung (A) als eine zweidimensionale Darstellung von Raumpunkten - projiziert auf eine als horizontal ausgerichtet angenommene Ebene - und
• die Aufrissdarstellung (B) als eine zweidimensionale Darstellung von Raumpunkten - projiziert auf eine als vertikal ausgerichtet angenommene Ebene - definiert ist.

5. Vermessungsgerät (10) nach einem der Ansprüche 1 bis 4,
**dadurch gekennzeichnet, dass** die als vertikal vorgegebene Richtung definierbar ist durch
• Neigungssensormittel, die zur Bestimmung der Neigung gegenüber dem Erdschwerefeld-Vektor um zwei Achsen und zur Übermittlung deren Messdaten an die Auswerte-und Steuereinheit ausgebildet sind, insbesondere wobei die Neigungssensormittel in die Basis (11) integriert sind, und/oder
• Vorabeinmessung einer in bekannter äusserer Ausrichtung befindlichen Referenz, insbesondere zweier Punkte eines pendelnd aufgehängten Lotstabs bzw. Senklots oder einer als horizontal oder vertikal ausgerichtet angenommenen Referenzebene, und daraus erfolgende Ableitung der als vertikal vorgegebenen Richtung durch die Auswerte- und Steuereinheit.

6. Verfahren zum Darstellungswechsel von einer auf einem Display eines Vermessungsgeräts (10) angezeigten Aufsichtdarstellung (A) oder räumlichen Darstellung hin zu einer Aufrissdarstellung (B), wobei das Vermessungsgerät (10) aufweist
• eine Basis (11),
• eine gegenüber der Basis dreh- und schwenkbaren, Distanzmessfunktionalität bereitstellenden Anzieleinheit (13) mit einer zur Emission eines Laserstrahls (14) in Richtung einer Zielachse ausgebildeten Laserquelle und einem Laserlicht-detektor,
• eine Auswerte- und Steuereinheit und
• ein Display,
wobei
• eine räumliche Ausrichtung der Anzieleinheit (13) gegenüber der Basis (11) über zwei Winkelmesser erfassbar ist,
• die mit der Laserquelle, dem Laserlichtdetektor sowie den Winkelmessern verbunden ist, um eine erfasste Distanz einer entsprechenden Ausrichtung zuzuordnen und somit Koordinaten für Raumpunkte zu bestimmen,
• eingegebene oder vermessenen Raumpunkte (1, 2, 3, 4, 5, 6), die eine Raumpunkt-Menge bilden, gespeichert sind und
• die Aufsichtdarstellung (A) bzw. räumliche Darstellung von zumindest einigen Raumpunkten (1, 2, 5, 6) aus der Raumpunkt-Menge angezeigt wird, wobei diese zumindest teilweise durch Linien verbunden sind,
**dadurch gekennzeichnet, dass** in Abhängigkeit von einer - aus den in der Aufsichtdarstellung (A) bzw. der räumlichen Darstellung angezeigten Linien - benutzerseitig ausgewählten Linie automatisch
• eine virtuelle Fläche durch die ausgewählte Linie und eine als vertikal vorgegebene Richtung definiert wird,
• eine Untermenge von Raumpunkten (1, 2, 3, 4) aus der Raumpunkt-Menge selektiert wird, die innerhalb einer die virtuelle Fläche definiert umgebenden Pufferzone (7) liegen, und
• eine Aufrissdarstellung (B) von ausschliesslich solchen Raumpunkten (1, 2, 3, 4), die zur Untermenge gehören, auf dem Display angezeigt wird.

7. Verfahren nach Anspruch 6,
**dadurch gekennzeichnet, dass**
• sich die Pufferzone vor und hinter der virtuellen Fläche erstreckt bis zu einem definierten maximalen Abstand zur virtuellen Fläche, insbesondere wobei ein Wert für den maximalen Abstand fix vorgegeben oder benutzerseitig vorgebbar ist in einem Bereich zwischen 0 und 100 cm, im Speziellen in einem Bereich zwischen 10 und 50 cm,
und/oder
• im Rahmen der Aufrissdarstellung (B) genau all diejenigen Raumpunkte (1, 2, 3, 4), die zur Untermenge gehören, darstellt werden, wobei diese zumindest teilweise durch Linien verbunden sind.

8. Verfahren nach Anspruch 6 oder 7,
**dadurch gekennzeichnet, dass**
durch benutzerseitige Auswahl - insbesondere durch doppeltes Anklicken anhand von Eingabemitteln - der einen Linie ein automatischer Ablauf des Verfahrens initiiert und gestartet wird und daraufhin somit automatisch - insbesondere unmittelbar in Reaktion auf die benutzerseitige Auswahl - die virtuelle Fläche definiert, die Untermenge selektiert sowie in die Aufrissdarstellung (B) gewechselt und auf dem Display angezeigt wird.

9. Verfahren nach einem der Ansprüche 6 bis 8,
**dadurch gekennzeichnet, dass**
• die räumliche Darstellung als eine dreidimensionale perspektivische Darstellung von Raumpunkten,
• die Aufsichtdarstellung (A) als eine zweidimensionale Darstellung von Raumpunkten - projiziert auf eine als horizontal ausgerichtet angenommene Ebene - und
• die Aufrissdarstellung (B) als eine zweidimensionale Darstellung von Raumpunkten - projiziert auf eine als vertikal ausgerichtet angenommene Ebene - definiert ist.

10. Computerprogrammprodukt mit Programmcode, der auf einem maschinenlesbaren Träger gespeichert ist, zur Durchführung des Verfahrens zum Darstellungswechsel von einer auf einem Display eines Vermessungsgeräts (10) angezeigten Aufsichtdarstellung (A) oder räumlichen Darstellung hin zu einer Aufrissdarstellung (B) nach einem der Ansprüche 6 bis 9, insbesondere wenn das Programm auf einer als Auswerte- und Steuereinheit des Vermessungsgeräts (10) nach einem der Ansprüche 1 bis 5 ausgebildeten elektronischen Datenverarbeitungseinheit ausgeführt wird.

11. System aus einem Konstruktionsvermessungsgerät (100) zum Vermessen und Markieren von Raumpunkten im Rahmen von Bau und/oder Ausbau - insbesondere Innenausbau - von Gebäuden und mindestens drei in Räumen anbringbaren Referenzpunkt-Marken, die jeweils ein bekanntes, einen diskreten Referenzpunkt indizierendes Muster aufweisen, wobei das Konstruktionsvermessungsgerät (100) aufweist
• eine Basis (110),
• ein an der Basis (110) um eine Drehachse drehbar gelagerten Oberteil (120),
• eine am Oberteil (120) um eine Schwenkachse schwenkbar gelagerte, Distanzmessfunktionalität bereitstellende Anzieleinheit (130) mit einer zur Emission eines Laserstrahls (140) in Richtung einer Zielachse ausgebildeten Laserquelle und einem Laserlicht-Detektor sowie mit einer in Richtung der Zielachse ausgerichteten integrierten digitalen Kamera, und
• eine Auswerte- und Steuereinheit mit Bildverarbeitungs- und Speichermitteln,
wobei
• ein erster und ein zweiter Drehantrieb das Oberteil (120) bzw. die Anzieleinheit (130) antreib- und ausrichtbar machen,
• eine räumliche Ausrichtung der Anzieleinheit gegenüber der Basis (110) über zwei Winkelmesser erfassbar ist und
• die Auswerte- und Steuereinheit mit der Laserquelle, dem Laserlicht-Detektor sowie den Winkelmessern verbunden ist, um eine erfasste Distanz einer entsprechenden Ausrichtung zuzuordnen und somit Relativ-Koordinaten für Raumpunkte zu bestimmen,
**dadurch gekennzeichnet, dass** das Konstruktionsvermessungsgerät (100) eine Referenzierungsfunktionalität zur Referenzierung des eigenen aktuellen Standorts und der eigenen aktuellen Orientierung gegenüber den in Sicht- und Anmessweite des Konstruktionsvermessungsgeräts (100) befindlichen Referenzpunkten aufweist, deren Absolut-Positionen in einem gewünschten Koordinatensystem bekannt, insbesondere von einem vorherigen Standort aus bereits eingemessen und gespeichert, sind, wobei im Rahmen der Referenzierungsfunktionalität nach Auslösung automatisch gesteuert durch die Auswerte- und Steuereinheit folgende Schritte ablaufen:
• Erfassen von mehreren Kamera-Bildern in unterschiedlichen Ausrichtungen der Anzieleinheit (130) innerhalb eines definierten Absuch-Sichtfeldbereichs,
• Auswerten der erfassten Kamera-Bilder durch Bildverarbeitung hinsichtlich eines Erkennens von den Referenzpunkt-Marken in den erfassten Kamera-Bildern anhand von deren jeweils bekannten Mustern,
• Bestimmen der jeweiligen Bild-Positionen der erkannten Referenzpunkt-Marken in den erfassten Kamera-Bildern,
• Ableiten von Raumwinkeln zu den durch die in den Kamera-Bildern erkannten Referenzpunkt-Marken jeweils indizierten Referenzpunkten anhand von
□ den jeweiligen Bild-Positionen der Referenzpunkt-Marken und
□ der jeweiligen Ausrichtung der Anzieleinheit (130), in welcher das jeweilige Kamera-Bild erfasst ist,
• sukzessives Anfahren der für die Referenzpunkte jeweils abgeleiteten Raumwinkel und Bestimmen der jeweiligen Relativ-Koordinaten der Referenzpunkte,
• Referenzieren des eigenen aktuellen Standorts und der eigenen aktuellen Orientierung gegenüber den Referenzpunkten anhand von den für die Referenzpunkte im gewünschten Koordinatensystem jeweils bekannten Absolut-Positionen und den für die Referenzpunkte jeweils bestimmten Relativ-Koordinaten.

12. System nach Anspruch 11,
wobei die Referenzpunkt-Marken jeweils aufweisen
• einen Musterträger, auf welchem das bekannte Muster aufgebracht, insbesondere aufgedruckt, ist und
• einen auf dem Musterträger vorgesehener Identifikationsbereich zur Kenntlichmachung der eigenen, individuellen Identität der jeweiligen Referenzpunkte, insbesondere wobei der Identifikationsbereich als eine aufgedruckte Identifizierungsnummer oder als ein Barcode oder als ein zur händischen Beschriftung vorgesehenes Freifeld ausgeführt ist.

13. System nach Anspruch 12,
wobei im Rahmen der Referenzierungsfunktionalität
• zusätzlich zum Schritt des Bestimmens der jeweiligen Bild-Positionen ein Bestimmen der jeweiligen Identitäten der Referenzpunkte durch Auslesung der jeweiligen Identifikationsbereiche der in den erfassten Kamera-Bildern erkannten Referenzpunkt-Marken anhand von Bildverarbeitung erfolgt, sowie
• ein paarweises Zuordnen der Absolut-Positionen und der Relativ-Koordinaten für die jeweiligen Referenzpunkte unter Zuhilfenahme der bestimmten Identitäten der Referenzpunkte erfolgt.

14. System nach einem der Ansprüche 11 bis 13,
wobei im Rahmen der Referenzierungsfunktionalität
• für die Schritte des sukzessiven Anfahrens und des jeweiligen Bestimmens der Relativ-Koordinaten der Referenzpunkte eine Feinanziel-Methode gemäss dem Erfindungsgegenstand der Europäischen Patentanmeldung mit der Anmeldenummer 10168771.3 zur Anwendung kommt.

15. Konstruktionsvermessungsgerät (100) für ein System nach einem der Ansprüche 11 bis 14, mit
• einer Basis (110),
• einem an der Basis (110) um eine Drehachse drehbar gelagerten Oberteil (120),
• einer am Oberteil (120) um eine Schwenkachse schwenkbar gelagerten, Distanzmessfunktionalität bereitstellenden Anzieleinheit (130) mit einer zur Emission eines Laserstrahls (140) in Richtung einer Zielachse ausgebildeten Laserquelle und einem Laserlicht-Detektor sowie mit einer in Richtung der Zielachse ausgerichteten integrierten digitalen Kamera, und
• einer Auswerte- und Steuereinheit mit Bildverarbeitungs- und Speichermitteln,
wobei
• ein erster und ein zweiter Drehantrieb das Oberteil (120) bzw. die Anzieleinheit (130) antreib- und ausrichtbar machen,
• eine räumliche Ausrichtung der Anzieleinheit gegenüber der Basis (110) über zwei Winkelmesser erfassbar ist und
• die Auswerte- und Steuereinheit mit der Laserquelle, dem Laserlicht-Detektor sowie den Winkelmessern verbunden ist, um eine erfasste Distanz einer entsprechenden Ausrichtung zuzuordnen und somit Relativ-Koordinaten für Raumpunkte zu bestimmen,
**dadurch gekennzeichnet, dass** das Konstruktionsvermessungsgerät (100) eine Referenzierungsfunktionalität zur Referenzierung des eigenen aktuellen Standorts und der eigenen aktuellen Orientierung gegenüber von - durch jeweils bekannte Muster von in Sicht- und Anmessweite des Konstruktionsvermessungsgeräts (100) befindlichen Referenzpunkt-Marken indizierten - Referenzpunkten aufweist, deren Absolut-Positionen in einem gewünschten Koordinatensystem bekannt, insbesondere von einem vorherigen Standort aus bereits eingemessen und gespeichert, sind, wobei im Rahmen der Referenzierungsfunktionalität nach Auslösung automatisch gesteuert durch die Auswerte- und Steuereinheit folgende Schritte ablaufen:
• Erfassen von mehreren Kamera-Bildern in unterschiedlichen Ausrichtungen der Anzieleinheit (130) innerhalb eines definierten Absuch-Sichtfeldbereichs,
• Auswerten der erfassten Kamera-Bilder durch Bildverarbeitung hinsichtlich eines Erkennens von den Referenzpunkt-Marken in den erfassten Kamera-Bildern anhand von deren jeweils bekannten Mustern,
• Bestimmen der jeweiligen Bild-Positionen der erkannten Referenzpunkt-Marken in den erfassten Kamera-Bildern,
• Ableiten von Raumwinkeln zu den durch die in den Kamera-Bildern erkannten Referenzpunkt-Marken jeweils indizierten Referenzpunkten anhand von
□ den jeweiligen Bild-Positionen der Referenzpunkt-Marken und
□ der jeweiligen Ausrichtung der Anzieleinheit (130), in welcher das jeweilige Kamera-Bild erfasst ist,
• sukzessives Anfahren der für die Referenzpunkte jeweils abgeleiteten Raumwinkel und Bestimmen der jeweiligen Relativ-Koordinaten der Referenzpunkte,
• Referenzieren des eigenen aktuellen Standorts und der eigenen aktuellen Orientierung gegenüber den Referenzpunkten anhand von den für die Referenzpunkte im gewünschten Koordinatensystem jeweils bekannten Absolut-Positionen und den für die Referenzpunkte jeweils bestimmten Relativ-Koordinaten.
